# EUROPEAN PATENT APPLICATION

(11) **EP 1 227 489 A1**
(43) Date of publication of application: **31.07.2002**
(21) Application number: 01300719.0
(22) Date of filing: 26.01.2001
(51) Int. Cl.: G11B 23/03, G11B 23/34, G11B 19/12

(54) **Disk cartridge and disk drive apparatus**

(30) Priority: 01.11.2000 KR 2000064556
(71) Applicant: SAMSUNG ELECTRONICS Co. Ltd., Kyungki-do, Seoul (KR)
(72) Inventor: Choi, Han-Kook, Kwonseon-gu, Suwon-city, Kyungki-do (KR); Lee, Yong-Hoon, Suwon-city, Kyungki-do (KR); Kim, Seok-jung, Paldal-gu, Suwon-city, Kyungki-do (KR)
(74) Representative: Chugg, David John

(57) **Abstract**

A disk cartridge (10) and a disk drive apparatus are provided. The disk cartridge (10) is provided with a reflector (13) for identification of the type of disk (12), and the disk drive apparatus is provided with an optical detector (120) for irradiating light on the reflector (13) and detecting light reflected from the reflector (13) to identify the type of disk (12). In the above structure, a large number of identification marks enough to identify the various types of disk can be provided by changing the angle of reflection and the volume of reflected light of the reflector provided on the disk cartridge. Accordingly, the various types of disk depending on the capacity of a disk, a product and a disk format can be individually identified.

## Description

The present invention relates to a disk cartridge accommodating a disk which is an information recording/reproducing disk and a disk drive apparatus for recording or reproducing information on or from the disk, and more particularly, to a disk cartridge and a disk drive apparatus having an improved identifying device for identifying the type of a disk.

Recently, a cartridge which rotatably accommodates a recording/reproducing medium such as an optical disk or an optical magnetic disk so that the disk can be used in a disk drive apparatus is widely used as a recording medium for multimedia including video and audio. The larger capacity of a disk cartridge was required with the development of multimedia, so a variety of disk cartridges with an improved recording density have been developed. For example, in the case of a digital versatile disk-random access memory (DVD-RAM), there are a variety of disk cartridges having different recording densities: a normal one-sided disk to only one surface of which information can be recorded, a double-sided disk to both surfaces of which information can be recorded; a one-sided double recording layer disk having a double recording layer on one surface so that information can be recorded on each layer; a double-sided double recording layer disk having a double recording layer on both surfaces; and a one-sided disk having a narrower track pitch.

A recording and reproducing method of a disk drive apparatus changes depending on a recording density. In other words, a disk drive apparatus uses a different method when recording and reproducing information to and from a disk depending on the structure of a track pitch or a recording layer type (a single layer or a double layer). Accordingly, a structure for identifying the type of a disk cartridge loaded to a disk drive apparatus is required.

As a conventional structure for identifying the type of a disk, a structure as shown in Figure 1 is disclosed in Japanese Patent Publication No. hei 11-120733. Referring to Figure 1, an identification magnet 5 for indicating a large capacity is installed to a disk cartridge 1 rotatably accommodating a disk 2 in a case 3. A disk drive apparatus 6 is provided with a magnetism sensor 7 for sensing the magnet 5. When the disk cartridge 1 is loaded into the disk drive apparatus 6, the magnetism sensor 7 senses the magnetic force of the magnet 5, determines that the disk cartridge 1 has a large capacity and transmits the determined result to a controller (not shown) of the disk drive apparatus 6 so that control suitable for the type of the disk cartridge 1 can be performed. On the other hand, the identification magnet 5 is not installed to a disk cartridge of a small capacity. Then, any magnetic force is not sensed by the magnetism sensor 7 when the disk cartridge of a low capacity is loaded into the disk drive apparatus 6, so it is determined that the currently loaded disk cartridge has a small capacity.

Since a conventional method identifies the type of disk cartridge based on the on/off state of the magnetism sensor 7 depending on the existence/non-existence of the magnet 5, just two types, for example, a large capacity and a small capacity, can be identified. Accordingly, to identify various types of disk cartridge as described above with such a conventional structure, it is necessary to change the number of magnets depending on the type of disk cartridge, install as many magnetism sensors 7 as the maximum number of magnets, and determine the type of disk cartridge based on how many times the magnetism sensor 7 is turned on, or it is necessary to install a magnet having different magnetic force depending on the type of disk cartridge and construct the magnetism sensor 7 with an accurate circuit for identifying the strength of magnetic force instead of a simple on/off structure.

However, increasing the number of magnets and magnetism sensors makes it difficult to realize a small and light disk drive apparatus, increases the manufacturing cost and reduces the productivity. When a structure is designed such that the type of a disk cartridge is identified depending on the strength of magnetic force, there is a burden of the construction of an accurate circuit. In addition, when the magnetic force of a magnet is degraded, the type of disk cartridge may be erroneously identified. Therefore, a disk cartridge and a disk drive apparatus which have a new simple structure allowing various types of disk cartridge to be identified are desired.

With a view to solve or reduce the above problems, it is an object of the present invention to provide an improved disk cartridge and disk drive apparatus having a simple structure for identifying the various types of disk cartridge.

According to a first aspect of the present invention, there is provided a disk cartridge having a disk as an information recording medium and case rotatably accommodating the disk therein, the disk cartridge comprising a reflector disposed on the case, the reflector being arranged, in use, to reflect incident light to a predetermined optical detector to allow the type of disk to be identified based on the reflected light.

Preferably, the reflector is designed to have a different angle of reflection depending on the type of disk so that light detected by the optical detector is different.

Preferably, the reflector is designed to reflect a different volume of light depending on the type of disk so that light detected by the optical detector is different.

The reflector may be designed to have a different reflection area depending on the type of disk.

The reflector may be designed to have a different colour depending on the type of disk.

The reflector may be formed by attaching or printing a label reflecting light on the case or coating the case with a reflective film.

The reflector may be provided on at least one of the top and bottom surfaces of the case.

The reflector may be provided on at least one of the right and left sides of the case.

According to a second aspect of the invention, there is provided a disk drive apparatus comprising: a recording/reproducing unit for recording and reproducing information to and from a disk of a disk cartridge; and an optical detector for irradiating light on a reflector provided on the disk cartridge and detecting light reflected from the reflector to identify the type of disk.

The optical detector may comprise a light emitting diode and a receiving photodetector.

A pair of receiving photodetectors may be symmetrically disposed at two opposite sides of the light emitting diode.

According to a third aspect of the invention, there is provided a mechanism of identifying the type of disk of a disk cartridge, wherein a reflector for identification of the type of disk is installed on the disk cartridge, and a disk drive apparatus for recording and reproducing information to and from the disk is provided with an optical detector for irradiating light on the reflector and detecting light reflected from the reflector to identify the type of disk.

For a better understanding of the invention, and to show how embodiments of the same may be carried into effect, reference will now be made, by way of example, to the accompanying diagrammatic drawings in which:

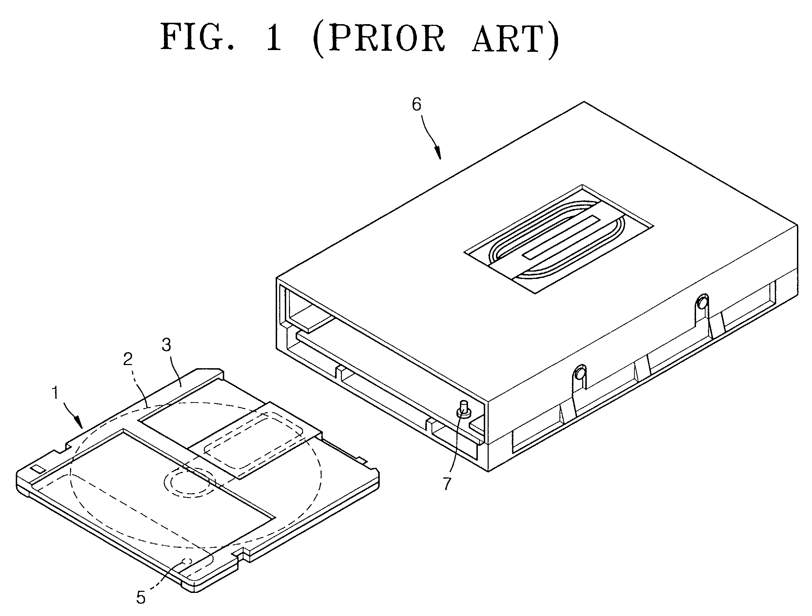

Figure 1 is a diagram illustrating a disk cartridge and a disk drive apparatus which have a conventional disk identification mechanism;
Figure 2 is a diagram illustrating a disk cartridge and a disk drive apparatus which have a disk identification mechanism according to a first embodiment of the present invention;
Figures 3 through 5 are diagrams illustrating the applications of the disk identification mechanism of Figure 2;
Figure 6 is a diagram illustrating a disk cartridge and a disk drive apparatus which have a disk identification mechanism according to a second embodiment of the present invention; and
Figures 7 through 9 are diagrams illustrating the applications of the disk identification mechanism of Figure 6.

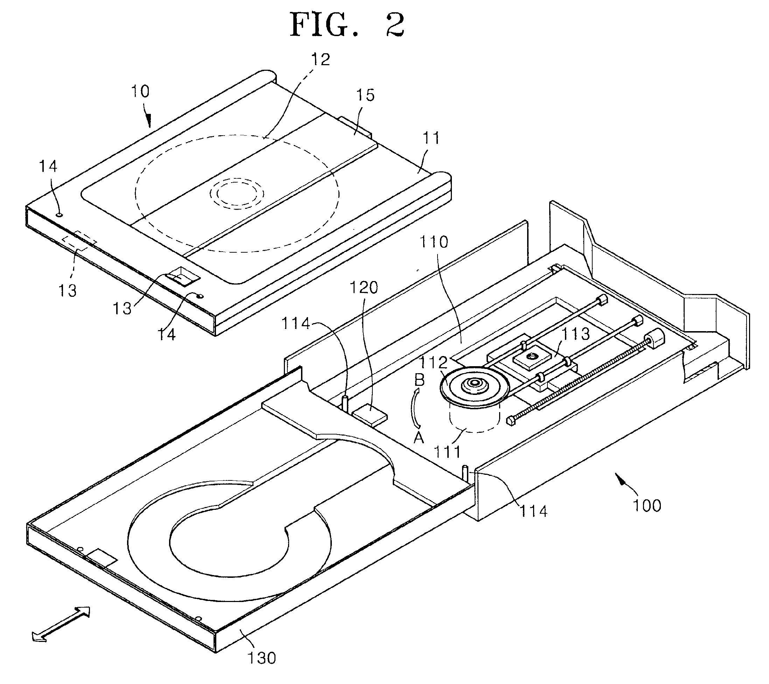

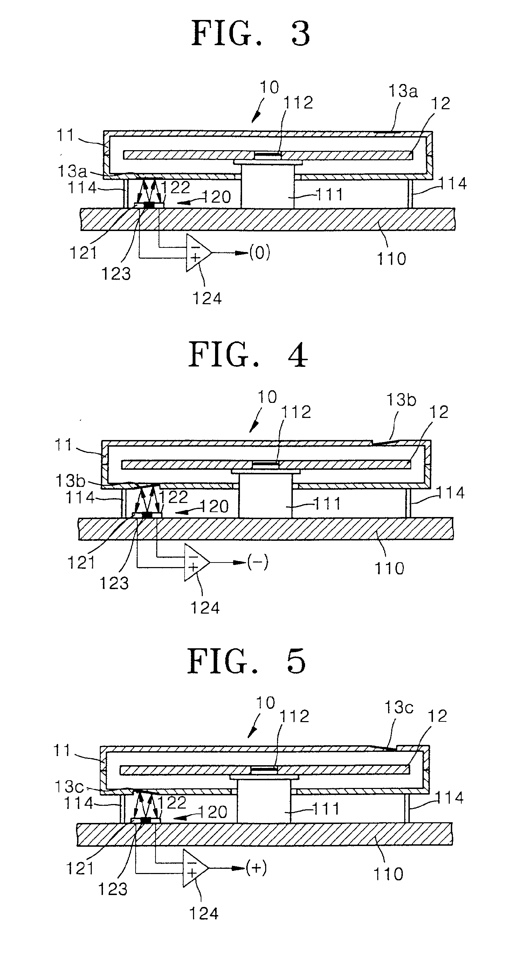

Figures 2 through 5 illustrate disk cartridges and disk drive apparatus, which have a disk identification mechanism according to a first embodiment of the present invention. Referring to Figure 2, a disk cartridge 10 accommodates a disk 12, an information recording and reproducing medium, in a case 11. A reflector 13 for reflecting incident light from a predetermined light source is provided on the top and bottom surfaces of the disk cartridge 10. This reflector 13 is provided for identifying the type of the disk 12 of the disk cartridge 10 and is formed by attaching or directly printing a label capable of reflecting light or coating with a reflecting film of a material such as aluminum. The reflector 13 has a different angle depending on the type of disk 12. In other words, the reflector 13 can be formed to be parallel with the horizontal surface of the case 11 (see Figure 3) or have a predetermined slope with respect to the horizontal surface of the case 11 (see Figure 4 or 5). This is based on the fact that reflected light changes when a reflection angle changes, and the type of a disk can be identified when this change is sensed. This mechanism will be described later in detail. Reference numeral 14 denotes a position decision hole in which a position decision pin 114 of a disk drive apparatus 100 is inserted, and reference numeral 15 denotes an opening/closing shutter.

The disk cartridge 10 is safely landed on a tray 130 and inserted into the disk drive apparatus 100. A moving chassis 110 moved in arrow headed directions A and B by a predetermined cam (not shown) is installed to the disk drive apparatus 100. On the moving chassis 110 are mounted a turntable 112 on which the disk 12 is safely landed, a spindle motor 111 for rotating the turntable 112 and a recording/reproducing unit including an optical pickup 113 for recording and reproducing information to and from the disk 12, and an optical detector 120 for irradiating light on the reflector 13, detecting light reflected from the reflector 13 and identify the type of the disk 12. The moving chassis 110 moves down in the direction A when the tray 130 comes out as shown in Figure 2. The moving chassis 110 moves up in the direction B when the tray 130 goes in. At this time, the disk 12 of the disk cartridge 10 is safely landed on the turntable 112, and the position decision pins 114 are inserted into the position decision holes 14.

As shown in Figures 3 through 5, the optical detector 120 is positioned below the reflector 13 (13a, 13b or 13c) when the disk cartridge 10 is installed in the disk drive apparatus 100 and includes a light emitting diode (LED) 123 and first and second photodetectors 121 and 122 symmetrically disposed at both sides of the LED 123. Signals detected by the first and second photodetectors 121 and 122 are summed up by a differential amplifier 124 and output as a predetermined resultant value.

An operation of identifying a disk using these reflector 13 and optical detector 120 progresses as follows. Once the disk cartridge 10 loaded on the tray 130 is inserted into the disk drive apparatus 100, the moving chassis 110 move up in the arrow headed direction B so that the disk 12 is safely landed on the turntable 112. Here, the optical detector 120 is positioned below the reflector 13. First, the case of a disk cartridge 10 having a reflector 13a parallel to the optical detector 120, as shown in Figure 3, will be described. Once the LED 123 irradiates light on the reflector 13a, light reflected from the reflector 13a is symmetrically incident upon the first photodetector 121 and the second photodetector 122. That is, the volume of light received by the first photodetector 121 is the same as that received by the second photodetector 122. Accordingly, the output of the differential amplifier 124 is "0". As a result, the disk drive apparatus 100 recognizes that the disk 12 of the currently installed disk cartridge 10 is an A type disk having the parallel reflector 13a as an identification mark.

In the case of a disk cartridge 10 having a reflector 13b slanting upward to the right, as shown in Figure 4, light irradiated from the LED 123 is not symmetrically reflected from the reflector 13b to the first and second photodetectors 121 and 122, but the larger volume of light is incident upon the second photodetector 122. Accordingly, the output of the differential amplifier 124 has a minus ("-") value. This means that the disk cartridge 10 has a B type disk having the reflector 13b slanting upward to the right as an identification mark.

When a reflector 13c slants upward to the left, as shown in Figure 5, light irradiated from the LED 123 is not symmetrically reflected from the reflector 13c to the first and second photodetectors 121 and 122, but the larger volume of light is incident upon the first photodetector 121. Accordingly, the output of the differential amplifier 124 has a plus ("+") value. This means that the disk cartridge 10 has a C type disk having the reflector 13c slanting upward to the left as an identification mark.

When different angles of reflection are realized by changing the slant of the reflector 13, the different resultant values are output. Here, when disk types are matched to the different angles of reflection, the different angles of reflection can sufficiently act as an identification mark.

When giving a difference to the volume of light reflected from the reflector 13 in addition to the different angles of reflection, much more cases can be made. In other words, the different volume of light may be reflected from the reflector 13 even at the same angle of reflection when, for example, a different colour is applied to the reflector 13. Then, the scale of the output value of the differential amplifier 124 changes so that another disk type can be identified. Here, the case of a parallel reflector is an exception since the output value is still "0" even if the scale changes. To give a difference to the volume of light reflected from the reflector 13, a different colour may be applied to the reflector 13, as described above, or a different material or a different area may be applied to the reflector 13. Accordingly, by changing the volume of reflected light, each of the various types of disk can be accurately identified. In particular, by combining the method of changing the volume of reflected light with the method of changing the angle of reflection, the number of output values can be considerably increased without adding a special apparatus, thereby sufficiently covering the various types of disk.

In this embodiment, the reflectors 13 (13a, 13b or 13c) are disposed on the top and bottom surfaces, respectively, of the case 11 under the assumption that the disk 12 of the disk cartridge 10 may be a double-sided disk. Accordingly, even if the disk cartridge 10 is turned upside down and inserted into the disk drive apparatus 100, the same identification operation as described above can be performed by the optical detector 120. When a disk cartridge of a one-sided disk is turned upside down and inserted, since there is no reflector, the type of disk cannot be detected so that an error message is generated. Accordingly, a user can check that the disk cartridge is wrongly inserted.

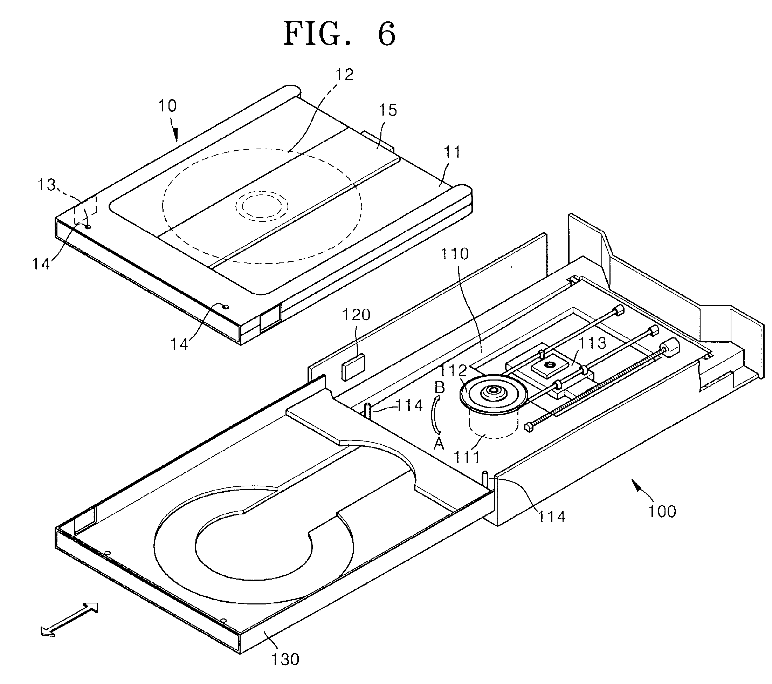

Figures 6 through 9 illustrate disk cartridges and disk drive apparatus which have a disk identification mechanism according to a second embodiment of the present invention. In the drawings, the same reference numerals represents the same members as those in the first embodiment. The second embodiment has the same structure as the first embodiment, with the exception that a reflector 13 (13d, 13e or 13f) is formed on the left and right sides of a disk cartridge 10, and accordingly, an optical detector 120 is formed on the sidewall of the disk drive apparatus 100.

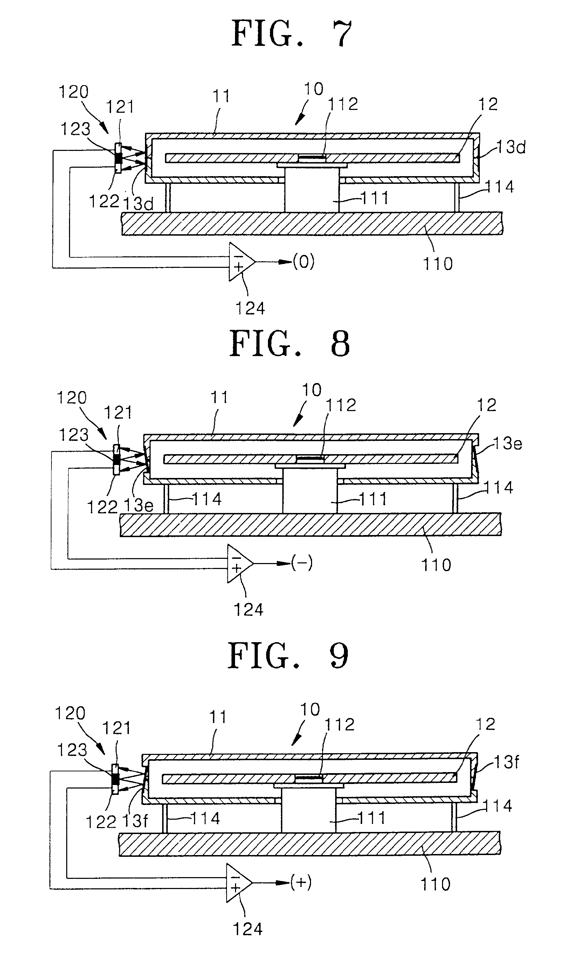

In the above structure, once the disk cartridge 10 loaded on a tray 130 is inserted into a disk drive apparatus 100, a moving chassis 110 move up in an arrow headed direction B so that a disk 12 is safely landed on a turntable 112. Here, the optical detector 120 is positioned at the side of the reflector 13. First, in the case where a reflector 13d is formed to be parallel to the optical detector 120, as shown in Figure 7, light irradiated from a LED 123 to the reflector 13d is reflected and symmetrically incident upon a first photodetector 121 and a second photodetector 122. Accordingly, the output of a differential amplifier 124 is "0". As a result, the disk drive apparatus 100 recognizes that the disk 12 of the currently installed disk cartridge 10 is an A type disk having the parallel reflector 13d as an identification mark.

In the case where a reflector 13e slants downward to the right, as shown in Figure 8, light irradiated from the LED 123 is not symmetrically reflected from the reflector 13b to the first and second photodetectors 121 and 122, but the larger volume of light is incident upon the second photodetector 122. Accordingly, the output of the differential amplifier 124 has a minus ("-") value. This means that the disk cartridge 10 has a B type disk having the reflector 13e slanting downward to the right as an identification mark.

In the case where a reflector 13f slants downward to the left, as shown in Figure 9, the larger volume of light is incident upon the first photodetector 121. Accordingly, the output of the differential amplifier 124 has a plus ("+") value. This means that the disk cartridge 10 has a C type disk having the reflector 13f slanting downward to the left as an identification mark.

Like the first embodiment, the scale of the volume of reflected light can be changed by applying different materials, sizes or colours to a reflector in addition to a change in the angle of reflection, so that the sufficient number of cases to cover the various types of disk can be made without adding a special apparatus.

A disk cartridge and disk drive apparatus according to embodiments of the present invention can provide a large number of cases enough to identify the various types of disk only with a simple structure of detecting light reflected from a reflector provided on a disk cartridge using an optical detector. Accordingly, the various types of disk depending on the capacity of a disk, a product and a disk format can be individually identified.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A disk cartridge (10) having a disk (12) as an information recording medium and case (11) rotatably accommodating the disk therein, the disk cartridge (10) comprising a reflector (13) disposed on the case (11), the reflector (13) being arranged, in use, to reflect incident light to a predetermined optical detector (120) to allow the type of disk (12) to be identified based on the reflected light.

2. The disk cartridge of claim 1, wherein the reflector (13) is designed to have a different angle of reflection depending on the type of disk (12) so that light detected by the optical detector is different.

3. The disk cartridge of claim 1, wherein the reflector (13) is designed to reflect a different volume of light depending on the type of disk so that light detected by the optical detector (120) is different.

4. The disk cartridge of claim 3, wherein the reflector (13) is designed to have a different reflection area depending on the type of disk.

5. The disk cartridge of claim 3, wherein the reflector (13) is designed to have a different colour depending on the type of disk.

6. The disk cartridge of any preceding claim, wherein the reflector (13) is formed by attaching or printing a label reflecting light on the case or coating the case (11) with a reflective film.

7. The disk cartridge of any preceding claim, wherein the reflector (13) is provided on at least one of the top and bottom surfaces of the case (11).

8. The disk cartridge of any of claims 1 to 6, wherein the reflector (13) is provided on at least one of the right and left sides of the case (11).

9. A disk drive apparatus comprising:
a recording/reproducing unit for recording and reproducing information to and from a disk of a disk cartridge; and
an optical detector (120) for irradiating light on a reflector (13) provided on the disk cartridge (10) and detecting light reflected from the reflector (13) to identify the type of disk (12).

10. The disk drive apparatus of claim 9, wherein the optical detector (120) comprises a light emitting diode (123) and a receiving photodetector.

11. The disk drive apparatus of claim 10, wherein a pair of receiving photodetectors (121, 122) are symmetrically disposed at two opposite sides of the light emitting diode (123).

12. A mechanism of identifying the type of disk of a disk cartridge, wherein a reflector (13) for identification of the type of disk (12) is installed on the disk cartridge (10), and a disk drive apparatus for recording and reproducing information to and from the disk is provided with an optical detector (120) for irradiating light on the reflector (13) and detecting light reflected from the reflector (13) to identify the type of disk (12).
